# EUROPÄISCHE PATENTSCHRIFT

(11) **EP 2 836 293 B1**
(45) Veröffentlichungstag und Bekanntmachung des Hinweises auf die Patenterteilung: **23.01.2019**
(21) Anmeldenummer: 13713408.6
(22) Anmeldetag: 26.03.2013
(51) Int. Cl.: B01F 5/06, B01F 15/00, B01F 13/10, B29L 31/00, B32B 37/14, B29C 53/40, B29C 61/02, B29C 65/02

(54) **MISCHER ZUM MISCHEN VON MINDESTENS ZWEI FLIESSFÄHIGEN KOMPONENTEN**
MIXER FOR MIXING AT LEAST TWO FLOWING COMPONENTS
MÉLANGEUR DESTINÉ À MÉLANGER AU MOINS DEUX COMPOSANTS POUVANT S'ÉCOULER

(30) Priorität: 24.05.2012 EP 12169331
(43) Veröffentlichungstag der Anmeldung: 18.02.2015
(73) Patentinhaber: Sulzer Mixpac AG, 9469 Haag (CH)
(72) Erfinder: ETTLIN, Josef, CH-9453 Eichberg (CH)
(74) Vertreter: Manitz Finsterwald Patentanwälte PartmbB
(86) Internationale Anmeldenummer: PCT/EP2013/056379
(87) Internationale Veröffentlichungsnummer: WO 2013/174549

(56) Entgegenhaltungen:
- EP-A1- 1 837 070
- EP-A2- 1 825 927
- EP-B1- 2 001 580

## Beschreibung

Die Erfindung betrifft einen Mischer zum Mischen von mindestens zwei fliessfähigen Komponenten gemäß dem Oberbegriff des Anspruchs 1 und Verfahren zur Herstellung eines Mischers zum Mischen von mindestens zwei fliessfähigen Komponenten gemäss dem Oberbegriff der Ansprüche 14 und 15.

In der EP 0 885 651 81 B1 wird ein Mischer zum Mischen von mindestens zwei fliessfähigen Komponenten beschrieben. Der Mischer verfügt über ein rohrförmiges Mischergehäuse, das sich in Richtung einer Längsachse bis zu einem distalen Mischer-Ende erstreckt, welches eine Austrittsöffnung für die Komponenten aufweist. Innerhalb des Mischergehäuses ist ein Mischelement in Form eines statischen Mischers zum Durchmischen der Komponenten angeordnet.

In der EP 0 885 651 81 B1 wird auf die genaue Ausgestaltung des Mischergehäuses nicht weiter eingegangen. Es ist aber bekannt, dass Mischergehäuse von derartigen Mischern aus Kunststoff bestehen und mittels eines Spritzgussverfahrens hergestellt werden. Das Mischergehäuse weist dann üblicherweise eine Wandstärke von ca. 0,8 bis 2,0 mm auf. Bei der Herstellung von derartigen Mischern werden zunächst das Mischergehäuse und das Mischelement in getrennten Spitzgussverfahren hergestellt und anschliessend Mischelement und Mischergehäuse kombiniert.

Die Druckschrift EP 1 837 070 A1 offenbart einen statischen Mischer und ein Verfahren zum Herstellen eines statischen Mischers. Eine Mehrzahl von Mischelementen wird in einer Abfolge angeordnet und von einer gemeinsamen und fluiddichten Hülle aus einer dünnen Schicht, einer Folie, einem Schrumpfschlauch oder dergleichen umgeben.

Die Druckschrift EP 2 001 580 B1 betrifft einen ähnlichen statischen Mischer und ein entsprechendes Verfahren zu dessen Herstellung, wobei die Mischelemente gegenseitig jeweils um 180° verschwenkt sind und über eine jeweilige Faltstelle gegenseitig verbunden und gegenseitig gefaltet sind.

Die Druckschrift EP 1 825 927 A2 beschreibt eine Dosiereinrichtung nach Art einer Spritze für ein mehrkomponentiges Material. Es ist eine Kartusche mit einem ersten und einem zweiten Ende vorgesehen, die für jede Komponente ein Kompartiment besitzt. Des Weiteren ist ein statischer Mischer in einstückiger Form mit der Kartusche am ersten Ende ausgebildet.

Es ist Aufgabe der Erfindung, einen Mischer zum Mischen von mindestens zwei fliessfähigen Komponenten und Verfahren zur Herstellung derartiger Mischer vorzuschlagen, welche kostengünstige Mischer ermöglichen.

Erfindungsgemäß wird diese Aufgabe mit einem Mischer mit den Merkmalen des Anspruchs 1 und mit Verfahren mit den Merkmalen der Ansprüche 13 und 14 gelöst.

Erfindungsgemäss ist das Mischergehäuse aus einer Kunststofffolie ausgeführt, welche eine Dicke von maximal 0,5 mm aufweist. Kunststofffolien sind in grossem Umfang und sehr günstig herstellbar. Darüber hinaus ist es sehr einfach und kostengünstig möglich, Kunststofffolien in eine gewünschte Grösse zu bringen. Es gibt sehr viele Anbieter, die unterschiedlichste Kunststofffolien in unterschiedlichen Grössen und Zuschnitten anbieten. Ausserdem existieren ausgereifte Maschinen, insbesondere in der Verpackungsindustrie, mittels welchen Kunststofffolien im grossen Umfang schnell und kostengünstig verarbeitet werden können. Das Mischergehäuse und damit auch der gesamte Mischer sind damit sehr kostengünstig herstellbar.

Ein weiterer Vorteil des erfindungsgemässen Mischers liegt darin, dass das nach Abschluss des Mischens und Austragens im Mischer verbleibende Abfallvolumen an Komponenten sehr gering ist. Der Mischer wird üblicherweise auf ein Behältnis mit wenigstens zwei getrennten Behältern, beispielsweise auf eine Zwei-Komponenten-Kartusche, aufgesetzt, welche die zu mischenden Komponenten enthält. Dabei handelt es sich häufig um Komponenten, die nach dem Mischen miteinander reagieren und dabei beispielsweise aushärten, so dass der Mischer nur einmal benutzt werden kann, da die im Mischer verbleibenden Komponenten miteinander reagieren und so den Mischer unbrauchbar machen. Zum Mischen und Austragen der Komponenten werden diese aus der Kartusche in den Mischer gedrückt. Dort werden sie gemischt und verlassen den Mischer über die Austrittsöffnung. Da die gemischten Komponenten über die Austrittsöffnung nur durch nachgeförderte Komponenten ausgetragen werden können, bleibt nach Abschluss des Mischens und Austragens immer ein Abfallvolumen an Komponenten im Mixer zurück. Da die Kunststofffolie sehr eng an das Mischelement anliegen kann und sich auch in aussen liegende Ausnehmungen des Mischelements hinein wölben kann, kann das Volumen zwischen Mischergehäuse und Mischelement, in dem sich Komponenten befinden können, sehr gering sein. Damit ist auch das oben genannte Abfallvolumen sehr gering, was eine effektive Nutzung der Komponenten in dem genannten Behältnis ermöglicht. Es ist aber auch möglich, dass mit dem Mischer mehr als zwei Komponenten gemischt werden.

Der Mischer ist insbesondere als ein statischer Mischer ausgeführt. Im Gegensatz zu einem dynamischen Mischer, welcher ein rotierendes Mischelement zum Mischen der Komponenten aufweist, verfügt ein statischer Mischer über ein fest stehendes Mischelement, welches durch seine spezielle Formgebung eine effiziente Mischung der Komponenten ermöglicht.

In Ausgestaltung der Erfindung ist die Kunststofffolie als eine Kunststofffolie ausgeführt, welche bei Erwärmung schrumpft. Die Kunststofffolie weist dann insbesondere eine Dicke von ca. 0,03 bis 0,07 mm auf.

Die Kunststofffolie kann insbesondere als eine Polyester-Folie insbesondere aus Polyethylenterephthalat (PET) ausgeführt sein. Es ist auch möglich, dass die Kunststofffolie aus Polyvinylchlorid (PVC), Polystyrol (PS), aus so genanntem Biokunststoff wie beispielsweise Polymilchsäure (PLA) oder einem anderen geeigneten Kunststoff besteht. Die Kunststofffolie kann auch als eine mehrlagige Folie mit mehreren Schichten bestehen.

Bei Verwendung einer derartigen Kunststofffolie kann zur Herstellung des Mischers das Mischergehäuse unter Wärmeeinwirkung einfach und kostengünstig auf das Mischelement aufgeschrumpft werden. Derartige Verfahren werden häufig zum Etikettieren, beispielsweise von Getränkeflaschen aus Glas oder Kunststoff angewandt und sind deshalb vielfach erprobt und ausgreift. Diese Verfahren werden als so genannte Sleeve-Verfahren bezeichnet.

In Ausgestaltung der Erfindung ist die die Kunststofffolie als eine nur in eine Richtung gestreckte Kunststofffolie ausgeführt. Kunststofffolien können zur Verbesserung ihrer Eigenschaften während der Herstellung gestreckt, also gedehnt werden. Die Kunststofffolie kann dabei entweder nur in eine Richtung oder auch in zwei senkrecht zueinander stehende Richtungen gestreckt werden. Für die Verwendung zum Aufschrumpfen auf das Mischelement ist insbesondere eine nur in eine Richtung gestreckte Kunststofffolie vorteilhaft. Diese ist dann so angeordnet, dass die Streckrichtung in Umfangsrichtung, also senkrecht zur Längsachse des Mischers orientiert ist. Beim Schrumpfen auf das Mischelement schrumpft die Kunststofffolie hauptsächlich in Streckrichtung und damit in Umfangsrichtung, so dass sie sich eng an das Mischelement anlegen kann. Ein übermässiges Schrumpfen in Längsrichtung ist nicht notwendig und auch nicht erwünscht, da ansonsten die Gefahr besteht, dass die Kunststofffolie in Längsrichtung zu stark schrumpft und sich das Mischergehäuse dann nicht mehr über die gesamte Länge des Mischers erstreckt. Bei Verwendung einer derartigen Kunststofffolie kann ein sicherer und reproduzierbarer Herstellungsprozess erreicht werden. Es können aber auch Folien verwendet werden, die in zwei Richtungen gestreckt sind, also so genannte biaxial gestreckte Kunstofffolien.

Für den Einsatz eines derartigen Sleeve-Verfahrens ist es besonders von Vorteil, wenn das Mischergehäuse ausgehend von einem Kunststoffschlauch hergestellt ist. Zur Herstellung des Mischers wird dann das Mischelement innerhalb des Kunststoffschlauchs angeordnet und anschliessend der Kunststoffschlauch unter Wärmeeinwirkung auf das innerhalb des Kunststoffschlauchs angeordnete Mischelement geschrumpft. Damit ist die Herstellung besonders effektiv und kostengünstig.

In Ausgestaltung der Erfindung weist der Mischer einen einstückig mit dem Mischelement ausgeführten Anschlussbereich auf, mittels welchem der Mischer mit einem die zu mischenden Komponenten enthaltenden Behälter, beispielsweise mit einer Zwei-Komponenten-Kartusche, verbunden werden kann. Der Anschlussbereich ist zumindest teilweise innerhalb des Mischergehäuses angeordnet. Der Anschlussbereich weist insbesondere einen gegenüber dem Mischelement einen grösseren Durchmesser auf. Durch das Aufschrumpfen der Kunststofffolie auf zumindest einen Teil des Anschlussbebereichs kann eine besonders feste und sichere Verbindung zwischen der Kunststofffolie und der Kombination aus Anschlussbereich und Mischergehäuse erreicht werden. Die Verbindung wird beim Austragen der Komponenten insbesondere in Längsrichtung des Mischers beansprucht. Zur Verbesserung der Verbindung können an einem Aussenumfang des Anschlussbereichs umlaufende Rippen oder Nuten angeordnet sein.

Die Kombination aus Mischelement und Anschlussbereich wird insbesondere mittels eines Spritzgussverfahrens aus Kunststoff hergestellt.

In Ausgestaltung der Erfindung ist die Kunststofffolie als eine schweissbare Kunststofffolie ausgeführt ist. Die Kunststofffolie kann dabei aus nur einem schweissbaren Kunststoff wie beispielsweise Polyethylen (PE) oder Polypropylen (PP) bestehen. Die Kunststofffolie ist allerdings insbesondere als eine mehrlagige Folie ausgeführt, wobei wenigstens die äusseren Schichten schweissbar ausgeführt sind. Zwischen den beiden äusseren Schichten weist die Kunststofffolie wenigstens eine innere Schicht auf, wobei die innere Schicht als so genannte Sperrschicht ausgeführt ist. Die Kunststofffolie kann auch mehr als eine, beispielsweise drei innere Schichten aufweisen.

Die schweissbaren äusseren Schichten sind insbesondere aus Polyethylen (PE) ausgeführt. Die innere Schicht bzw. die inneren Schichten können beispielsweise aus Polyamiden, Polyester, Glas, Metall oder einem anderen geeigneten Material bestehen.

In Ausgestaltung der Erfindung weist das Mischergehäuse eine entlang der Mischer-Achse orientierte erste Schweissnaht auf, mittels welcher ein erstes Ende der Kunststofffolie und ein zweites Ende der Kunststofffolie miteinander verschweisst sind. Durch diese genannte erste Schweissnaht wird aus der Kunststofffolie auf einfache und damit kostengünstige Art und Weise das Mischergehäuse hergestellt.

Um eine besonders sichere Fixierung des Mischergehäuses am Mischelement zu erreichen, wird das genannte erste Ende der Kunststofffolie mit dem Mischelement verschweisst, so dass das Mischergehäuse eine zweite Schweissnaht zwischen dem ersten Ende der Kunststofffolie und dem Mischelement aufweist. Dazu sollte eine Kontaktfläche zwischen dem ersten Ende der Kunststofffolie und dem Mischelement möglichst plan und möglichst gross sein. Es ist auch möglich, dass die Kunststofffolie auf grossflächig mit dem Mischelement verschweisst wird. Darunter ist insbesondere zu verstehen, dass die Kunststofffolie mit allen aussen liegenden Flächen des Mischelements verschweisst wird.

Bei der Herstellung des Mischers wird zunächst das erste Ende der Kunststofffolie mit dem Mischelement verschweisst, dann die Kunststofffolie um das Mischelement gewickelt und anschliessend das zweite Ende der Kunststofffolie ebenfalls entlang der Längsachse mit dem ersten Ende der Kunststofffolie verschweisst.

In Ausgestaltung der Erfindung ist die Austrittsöffnung als ein Anschluss für einen aufsteckbaren Applikator ausgeführt. Der Applikator kann beispielsweise als ein biegbares dünnes Rohr ausgeführt sein, mittels welchem die gemischten Komponenten besonders genau an die gewünschten Stellen aufgebracht werden können. Derartige Applikatoren werden häufig im zahnmedizinischen Bereich verwendet, weshalb ein derartiger Anschluss auch als ein so genannter "Intra Oral Tip"-Anschluss (IOT- Anschluss) bezeichnet wird. Damit ist der Mischer besonders vielseitig einsetzbar.

Der genannte Anschluss für einen Applikator ist insbesondere einstückig mit dem Mischelement ausgeführt. Damit ist keine zusätzliche Verbindung zwischen dem Anschluss und dem Mischelement oder dem Mischergehäuse notwendig, was einen besonders einfachen Aufbau des Mischers ermöglicht.

Die Kombination aus Mischelement und Anschluss für einen Applikator wird insbesondere mittels eines Spritzgussverfahrens aus Kunststoff hergestellt.

Der genannte Anschluss für einen Applikator kann insbesondere auch als ein separates Bauteil ausgeführt sein, wobei er dann zumindest teilweise innerhalb des Mischergehäuses angeordnet ist und damit vom Mischergehäuse gehalten wird. Dieser Aufbau kann vorteilhaft sein, wenn die Herstellung eines Mischerelements mit integriertem Anschluss für einen Applikator zu kompliziert und in der Herstellung zu aufwendig ist. Durch die zumindest teilweise Anordnung des Anschlusses innerhalb des Mischergehäuses kann der Anschluss am Mischer fixiert werden. Der Anschluss und das Mischelement können für eine feste Fixierung über umlaufende Rippen oder Nuten verfügen.

Die genannte Aufgabe wird auch durch ein Verfahren zur Herstellung eines Mischers zum Mischen von mindestens zwei fliessfähigen Komponenten gelöst, wobei der Mischer über ein rohrförmiges Mischergehäuse verfügt, das sich in Richtung einer Längsachse bis zu einem distalen Mischer-Ende erstreckt, welches eine Austrittsöffnung für die Komponenten aufweist. In dem Mischergehäuse ist mindestens ein Mischelement zum Durchmischen der Komponenten angeordnet. Erfindungsgemäss wird zur Herstellung des Mischergehäuses das Mischelement in einem Schlauch aus einer Kunststofffolie angeordnet, welcher unter Wärmeeinwirkung so weit in radialer Richtung geschrumpft wird, bis die Kunststofffolie am Mischelement anliegt.

Die genannte Aufgabe wird auch durch ein Verfahren zur Herstellung eines Mischers zum Mischen von mindestens zwei fliessfähigen Komponenten gelöst, wobei der Mischer über ein rohrförmiges Mischergehäuse verfügt, das sich in Richtung einer Längsachse bis zu einem distalen Mischer-Ende erstreckt, welches eine Austrittsöffnung für die Komponenten aufweist. In dem Mischergehäuse ist mindestens ein Mischelement zum Durchmischen der Komponenten angeordnet. Erfindungsgemäss wird ein erstes Ende einer Kunststofffolie entlang der Längsachse mit dem Mischelement verschweisst. Anschliessend wird die Kunststofffolie um das Mischelement gewickelt wird und dann ein zweites Ende der Kunststofffolie ebenfalls entlang der Längsachse mit dem ersten Ende der Kunststofffolie verschweisst.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: einen Mischer zum Mischen von mindestens zwei fliessfähigen Komponenten mit einem Mischergehäuse aus einer aufgeschrumpften Kunststofffolie,
- Fig. 2: den Mischer aus Fig. 1 vor dem Aufschrumpfen der Kunststofffolie,
- Fig. 3: einen Mischer mit einem Anschluss für einen Applikator,
- Fig. 4: einen Mischer mit einem Anschluss für einen Applikator in einer zweiten Ausführungsform,
- Fig. 5: einen Mischer zum Mischen von mindestens zwei fliessfähigen Komponenten mit einem Mischergehäuse aus einer verschweissten Kunststofffolie,
- Fig. 6: den Mischer aus Fig. 5 vor dem vollständigen Verschweissen der Kunststofffolie und
- Fig. 7: eine Schnittdarstellung einer mehrlagigen Kunststofffolie, welche für ein Mischergehäuse verwendet werden kann.

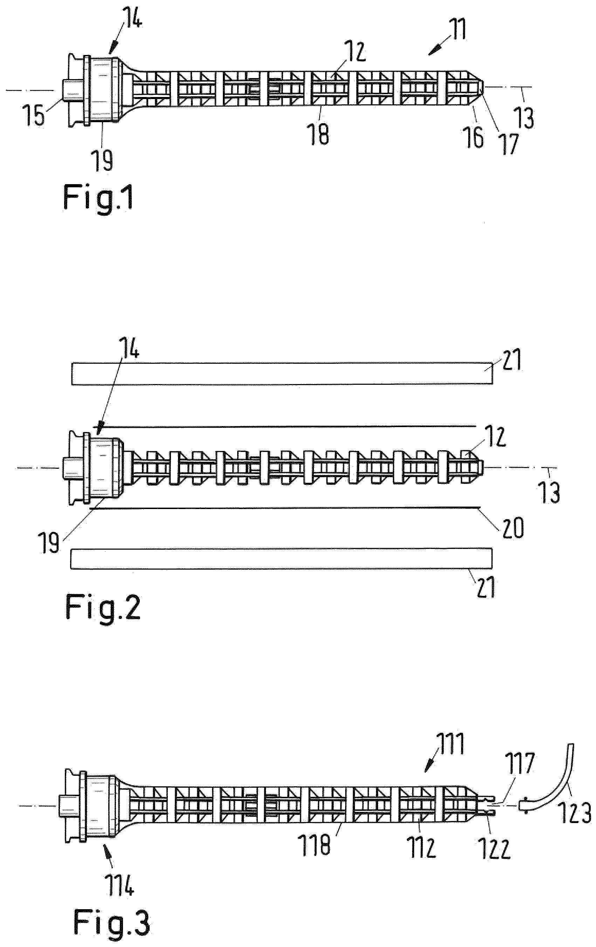

Gemäss Fig. 1 weist ein Mischer 11 zum Mischen von mindestens zwei fliessfähigen Komponenten ein statisches Mischelement 12 auf, das eine hauptsächlich zylindrische Aussenkontur aufweist. Das Mischelement 12 erstreckt sich längs einer Längsachse 13 des Mischers 11. Das Mischelement 12 ist einstückig mit einem Anschlussbereich 14 ausgeführt, mittels welchem der Mischer 11 mit einer nicht dargestellten Zwei-Komponenten-Kartusche verbunden werden kann. Der Anschlussbereich 14 weist zwei getrennte Mischereingänge auf, über die die zu mischenden Komponenten dem Mischer 11 aus der Zwei-Komponenten-Kartusche zugeführt werden können. In der Fig. 1 ist allerdings nur ein Mischereingang 15 dargestellt. Der zweite Mischereingang ist in der Ansicht der Fig. 1 hinter dem Mischereingang 15 angeordnet. Das Mischelement 12 und der Anschlussbereich 14 sind aus Kunststoff mittels eines Spritzgussverfahrens hergestellt. Das Mischelement 12 weist eine spezielle Geometrie auf, die eine gute Durchmischung der Komponenten ermöglicht. Die genaue Geometrie des Mischelements 12 ist hier nicht weiter von Interesse.

Der Mischer 11 erstreckt sich vom Anschlussbereich 14 entlang der Längsachse 13 bis zu einem distalen Mischer-Ende 16, welches eine Austrittsöffnung 17 für die gemischten Komponenten aufweist.

Der Mischer 11 weist ausserdem ein Mischergehäuse 18 auf, welches sich entlang der Längsachse 13 erstreckt. Innerhalb des Mischergehäuses 18 ist das Mischelement 12 und ein dem Mischelement 12 benachbarter Teilbereich 19 des Anschlussbereichs 14 angeordnet. Das Mischergehäuse 18 ist aus einer Kunststofffolie ausgeführt, die eine Dicke zwischen 0,03 und 0,2 mm aufweist. Die Kunststofffolie ist beispielsweise als eine nur in eine Richtung gestreckte Folie aus Polyethylenterephthalat (PET) ausgeführt. Die Kunststofffolie schrumpft damit bei Erwärmung und zwar insbesondere in der Richtung, in der sie bei der Herstellung gestreckt wurde.

In Fig. 2 ist der Mischer 11 mit noch nicht aufgeschrumpftem Mischergehäuse dargestellt. Zur Herstellung des Mischers 11 werden das Mischelement 12 und der genannte Teilbereich 19 des Anschlussbereichs 14 in einem Kunststoffschlauch 20 aus Kunststofffolie angeordnet, der später das Mischergehäuse 18 bildet. Die Kunststofffolie, aus der der Kunststoffschlauch 20 besteht, ist in Umfangsrichtung, also senkrecht zur Längsachse 13 gestreckt. Um den Kunststoffschlauch 20 herum sind Heizelemente 21 angeordnet, die den Kunststoffschlauch 20 so erwärmen, dass er auf das Mischelement 12 und den genannte Teilbereich 19 des Anschlussbereichs 14 aufgeschrumpft wird. Der Kunststoffschlauch 20 wird also durch die Wärmeeinwirkung so weit in radialer Richtung geschrumpft, bis die Kunststofffolie am Mischelement anliegt. Ein derartiges Verfahren wird als so genanntes Sleeve-Verfahren bezeichnet.

Der Mischer kann auch zusätzlich einen Anschluss für einen aufsteckbaren Applikator aufweisen. Ein derartiger Mischer 111 ist in Fig. 3 dargestellt. Der Mischer 111 ist stark ähnlich aufgebaut wie der Mischer 11 aus Fig. 1, weshalb hauptsächlich auf die Unterschiede der beiden Mischer eingegangen wird.

Gemäss Fig. 3 ist der Anschluss 122 für einen Applikator 123 einstückig mit einem Mischelement 112 ausgeführt. Der Anschluss 122 bildet dann eine Austrittsöffnung 117 des Mischers 111. Die Einheit aus Anschlussbereich 114, Mischelement 112 und Anschluss 122 wird ebenfalls mittels eines Spritzgussverfahrens aus Kunststoff hergestellt. Das Mischergehäuse 118 endet bei dieser Ausführungsform im Bereich des Anschlusses 122.

Der Applikator 123 ist in diesem Fall als ein biegbares dünnes Rohr ausgeführt. Er kann aber auch eine andere Form aufweisen. Er ist so ausgeführt, dass er auf den Anschluss 122 gesteckt und verschnappt werden kann.

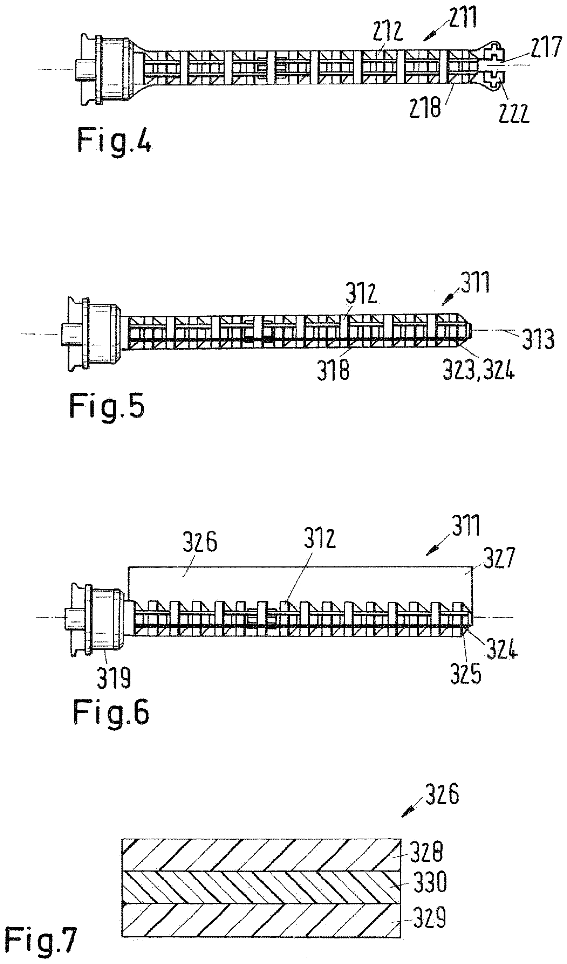

In Fig. 4 ist ein Mischer 211 mit einem Anschluss für einen Applikator in einer zweiten Ausführungsform dargestellt. Das Mischelement 212 und der Anschluss 222 für einen in Fig. 4 nicht dargestellten Applikator ist bei dieser Ausführungsform aus zwei separaten Bauteilen ausgeführt. Das Mischergehäuse 218 umschliesst auch einen Teil des Anschlusses 222 und fixiert so den Anschluss 222 am Mischer 211. Der Anschluss 222 bildet dann eine Austrittsöffnung 217 des Mischers 211.

Neben dem beschriebenen Verfahren zur Herstellung des Mischergehäuses durch Schrumpfen kann das Mischergehäuse auch auf eine andere Art aus einer Kunststofffolie hergestellt werden. In Fig. 5 ist ein derartiger Mischer dargestellt.

Der Mischer 311 ist stark ähnlich aufgebaut wie der Mischer 11 aus Fig. 1, weshalb hauptsächlich auf die Unterschiede der beiden Mischer eingegangen wird. Der Mischer 311 weist ein Mischergehäuse 318 auf, das aus einer mehrlagigen Kunststofffolie besteht und durch Verschweissen hergestellt wird. In Fig. 6 ist der Mischer 311 mit noch nicht ganz fertig gestelltem Mischergehäuse 318 dargestellt. Auf den Aufbau der Kunststofffolie wird weiter unten in Zusammenhang mit Fig. 7 näher eingegangen.

Das Mischergehäuse 318 erstreckt sich beim Mischer 311 nur entlang des Mischelements 312. Das Mischergehäuse 318 weist zwei Schweissnähte 323, 324 auf, die entlang der Längsachse 313 orientiert sind. Mit der ersten Schweissnaht 323 ist ein erstes Ende 325 der Kunststofffolie 326 und ein zweites Ende 327 der Kunststofffolie 326 miteinander verschweisst. Mit der zweiten Schweissnaht 324 ist das genannte erste Ende 325 der Kunststofffolie 326 mit dem Mischelement 312 verschweisst, wobei die zweite Schweissnaht 324 vor der ersten Schweissnaht 323 aufgebracht wird. Die beiden Schweissnähte 323, 324 liegen in dieser Ausführungsform übereinander. Sie können aber auch an unterschiedlichen Stellen am Umfang des Mischelements angeordnet sein.

In Fig. 6 ist der Mischer 311 nach dem Aufbringen der zweiten Schweissnaht 324 und vor dem Aufbringen der ersten Schweissnaht 323 dargestellt. Nach dem Verschweissen des erstes Endes 325 der Kunststofffolie 326 entlang der Längsachse 313 mit dem Mischelement 312 wird die Kunststofffolie 326 um das Mischelement 312 gewickelt und zum Abschluss das zweites Ende 327 der Kunststofffolie 326 ebenfalls entlang der Längsachse 313 mit dem ersten Ende 325 der Kunststofffolie 326 verschweisst. Die Kunststofffolie 326 weist dabei beispielsweise eine Dicke von ca. 0,1 mm auf

Falls ein Anschlussbereich für den Anschluss an eine Zwei-Komponenten-Kartusche Öffnungen aufweist, die abgedeckt werden müssen, kann eine zweite Kunststofffolie um den Anschlussbereich herum angeordnet werden. Diese zweite Kunststofffolie kann ebenfalls durch Verschweissen fixiert werden.

Der Mischer mit dem verschweissten Mischergehäuse kann ebenfalls einen Anschluss für einen Applikator aufweisen. Dieser Anschluss kann ebenfalls einstückig mit dem Mischelement oder als separates Bauteil ausgeführt sein.

In Fig. 7 ist der Aufbau der schweissbaren Kunststofffolie 326 dargestellt. Die Kunststofffolie 326 weist zwei aussen liegende, also zwei äussere Schichten 328, 329 und eine zwischen den beiden äusseren Schichten 328, 329 angeordnete innere Schicht 330 auf. Die äusseren Schichten 328, 329 bestehen aus Polyethylen (PE), also einem schweissbaren Kunststoff. Die innere Schicht 330, die als eine so genannte Sperrschicht wirkt, besteht aus Polyamid (PA). Die Schichten werden bei der Herstellung der Kunststofffolie untrennbar miteinander verbunden.

Die Kunststofffolie kann auch mehr als eine innere Schicht aufweisen. Die Schichten können auch aus anderen geeigneten Werkstoffen bestehen.

## Patentansprüche

1. Mischer (11) zum Mischen von mindestens zwei fliessfähigen Komponenten mit
- einem rohrförmigen Mischergehäuse (18, 118, 218, 318), das sich in Richtung einer Längsachse (13, 313) bis zu einem distalen Mischer-Ende (16) erstreckt, welches eine Austrittsöffnung (17, 117, 217) für die Komponenten aufweist und
- mit mindestens einem in dem Mischergehäuse (18, 118, 218, 318) angeordneten Mischelement (12, 112, 212, 312) zum Durchmischen der Komponenten,
wobei das Mischergehäuse (18, 118, 218, 318) aus einer Kunststofffolie (20, 326) ausgeführt ist, welche eine Dicke von maximal 0,5 mm aufweist, und
mit einem einstückig mit dem Mischelement (12, 112, 212) ausgeführten Anschlussbereich (14, 114), welcher zumindest teilweise innerhalb des Mischergehäuses (18, 118, 218) angeordnet ist.

2. Mischer (11) nach Anspruch 1,
**dadurch gekennzeichnet, dass**
die Kunststofffolie (20, 326) als eine Kunststofffolie (20, 326) ausgeführt ist, welche bei Erwärmung schrumpft.

3. Mischer (11) nach Anspruch 2,
**dadurch gekennzeichnet, dass**
die Kunststofffolie (20, 326) als eine nur in eine Richtung gestreckte Kunststofffolie (20, 326) ausgeführt ist.

4. Mischer (11) nach Anspruch 2 oder 3,
**dadurch gekennzeichnet, dass**
das Mischergehäuse (18, 118, 218) ausgehend von einem Kunststoffschlauch (20) hergestellt ist, der unter Wärmeeinwirkung auf das innerhalb des Kunststoffschlauchs (20) angeordnete Mischelement (12, 112, 212) geschrumpft wird.

5. Mischer (11) nach einem der Ansprüche 2 bis 4,
**dadurch gekennzeichnet, dass**
die Folie (20, 326) als eine Polyester-Folie ausgeführt ist.

6. Mischer (11) nach Anspruch 1,
**dadurch gekennzeichnet, dass**
die Kunststofffolie (20, 326) als eine schweissbare Kunststofffolie ausgeführt ist.

7. Mischer (11) nach Anspruch 6,
**dadurch gekennzeichnet, dass**
die Kunststofffolie (326) als eine mehrlagige Folie ausgeführt ist, wobei wenigstens die äusseren Schichten (328, 329) schweissbar ausgeführt sind.

8. Mischer (11) nach Anspruch 6 oder 7,
**dadurch gekennzeichnet, dass**
das Mischergehäuse (318) eine entlang der Längsachse (313) orientierte erste Schweissnaht (323) aufweist, mittels welcher ein erstes Ende (325) der Kunststofffolie (326) und ein zweites Ende (327) der Kunststofffolie (326) miteinander verschweisst sind.

9. Mischer (11) nach Anspruch 8,
**dadurch gekennzeichnet, dass**
das Mischergehäuse (318) eine entlang der Längsachse (313) orientierte zweite Schweissnaht (324) aufweist, mittels welcher das erste Ende (325) der Kunststofffolie (326) und das Mischelement (312) miteinander verschweisst sind.

10. Mischer (11) nach einem der Ansprüche 1 bis 9,
**dadurch gekennzeichnet, dass**
die Austrittsöffnung (117, 217) als ein Anschluss (122, 222) für einen aufsteckbaren Applikator (123) ausgeführt ist.

11. Mischer (11) nach Anspruch 10,
**dadurch gekennzeichnet, dass**
der Anschluss (122) einstückig mit dem Mischelement (112) ausgeführt ist.

12. Mischer (11) nach Anspruch 10,
**dadurch gekennzeichnet, dass**
der Anschluss (222) als separates Bauteil ausgeführt und zumindest teilweise innerhalb des Mischergehäuses (218) angeordnet ist.

13. Verfahren zur Herstellung eines Mischers (11) zum Mischen von mindestens zwei fliessfähigen Komponenten mit
- einem rohrförmigen Mischergehäuse (18, 118, 218), das sich in Richtung einer Längsachse (13) bis zu einem distalen Mischer-Ende (16) erstreckt, welches eine Austrittsöffnung (17, 117, 217) für die Komponenten aufweist,
- mit mindestens einem in dem Mischergehäuse (18, 118, 218) angeordneten Mischelement (12, 112, 212) zum Durchmischen der Komponenten und
- mit einem einstückig mit dem Mischelement (12, 112, 212) ausgeführten Anschlussbereich (14, 114),
wobei zur Herstellung des Mischergehäuses (18, 118, 218) das Mischelement (12, 112, 212) in einem Schlauch (20) aus einer Kunststofffolie (20, 326) angeordnet wird, welcher unter Wärmeeinwirkung so weit in radialer Richtung geschrumpft wird, bis die Kunststofffolie (20, 326) am Mischelement (18, 118, 218) anliegt und der Anschlussbereich (14, 114) zumindest teilweise innerhalb des Mischergehäuses (18, 118, 218) angeordnet ist.

14. Verfahren zur Herstellung eines Mischers (11) zum Mischen von mindestens zwei fliessfähigen Komponenten mit
- einem rohrförmigen Mischergehäuse (18, 118, 218, 318), das sich in Richtung einer Längsachse (313) bis zu einem distalen Mischer-Ende erstreckt, welches eine Austrittsöffnung für die Komponenten aufweist,
- mit mindestens einem in dem Mischergehäuse (18, 118, 218, 318) angeordneten Mischelement (12, 112, 212, 312) zum Durchmischen der Komponenten und
- mit einem einstückig mit dem Mischelement (12, 112, 212) ausgeführten Anschlussbereich (14, 114),
wobei zur Herstellung des Mischergehäuses (18, 118, 218, 318)
- ein erstes Ende (325) einer Kunststofffolie (20, 326) entlang der Längsachse (313) mit dem Mischelement (12, 112, 212, 312) verschweisst wird,
- die Kunststofffolie (20, 326) um das Mischelement (12, 112, 212, 312) gewickelt wird und
- ein zweites Ende (327) der Kunststofffolie (20, 326) ebenfalls entlang der Längsachse (313) mit dem ersten Ende (325) der Kunststofffolie (20, 326) verschweisst wird,
- so dass der Anschlussbereich (14, 114) zumindest teilweise innerhalb des Mischergehäuses (18, 118, 218, 318) angeordnet ist.

## Claims

1. A mixer (11) for mixing at least two flowable components having
- a tubular mixer housing (18, 118, 218, 318) which extends in the direction of a longitudinal axis (13, 313) up to a distal mixer end (16) which has an outlet opening (17, 117, 217) for the components, and
- at least one mixing element (12, 112, 212, 312) arranged in the mixer housing (18, 118, 218, 318) for mixing the components, wherein the mixer housing (18, 118, 218, 318) is made from a plastic film (20, 326) which has a thickness of a maximum of 0.5 mm, and
said mixer (11) having a connector region (14, 114) which is made in one piece with the mixing element (12, 112, 212) and which is arranged at least partly within the mixer housing (18, 118, 218).

2. A mixer (11) in accordance with claim 1,
**characterized in that**
the plastic film (20, 326) is designed as a plastic film (20, 326) which shrinks on heating.

3. A mixer (11) in accordance with claim 2,
**characterized in that**
the plastic film (20, 326) is designed as a plastic film (20, 326) only stretched in one direction.

4. A mixer (11) in accordance with claim 2 or claim 3,
**characterized in that**
the mixer housing (18, 118, 218) is manufactured starting from a plastic hose (20) which is shrunk onto the mixing element (12, 112, 212) arranged within the plastic hose (20) under the effect of heat.

5. A mixer (11) in accordance with any one of the claims 2 to 4,
**characterized in that**
the film (20, 326) is designed as a polyester film.

6. A mixer (11) in accordance with claim 1,
**characterized in that**
the plastic film (20, 326) is designed as a weldable plastic film.

7. A mixer (11) in accordance with claim 6,
**characterized in that**
the plastic film (326) is designed as a multilayer film, with at least the outer layers (328, 329) being weldable.

8. A mixer (11) in accordance with claim 6 or claim 7,
**characterized in that**
the mixer housing (318) has a first weld seam (323) which is oriented along the longitudinal axis (313) and by means of which a first end (325) of the plastic film (326) and a second end (327) of the plastic film (326) are welded to one another.

9. A mixer (11) in accordance with claim 8,
**characterized in that**
the mixer housing (318) has a second weld seam (324) which is oriented along the longitudinal axis (313) and by means of which the first end (325) of the plastic film (326) and the mixing element (312) are welded to one another.

10. A mixer (11) in accordance with any one of the claims 1 to 9,
**characterized in that**
the outlet opening (117, 217) is designed as a connector (122, 222) for an applicator (123) which can be plugged on.

11. A mixer (11) in accordance with claim 10,
**characterized in that**
the connector (122) is made in one piece with the mixing element (112).

12. A mixer (11) in accordance with claim 10,
**characterized in that**
the connector (222) is designed as a separate component and is arranged at least partly within the mixer housing (218).

13. A method of manufacturing a mixer (11) for mixing at least two flowable components having
- a tubular mixer housing (18, 118, 218) which extends in the direction of a longitudinal axis (13) up to a distal mixer end (16) which has an outlet opening (17, 117, 217) for the components,
- at least one mixing element (12, 112, 212) arranged in the mixer housing (18, 118, 218) for mixing the components, and
- a connector region (14, 114) which is made in one piece with the mixing element (12, 112, 212),
wherein, for manufacturing the mixer housing (18, 118, 218), the mixing element (12, 112, 212) is arranged in a hose (20) which comprises a plastic film (20, 326) and which is shrunk so far in the radial direction under the effect of heat until the plastic film (20, 326) contacts the mixing element (18, 118, 218) and the connector region (14, 114) is arranged at least partly within the mixer housing (18, 118, 218).

14. A method of manufacturing a mixer (11) for mixing at least two flowable components having
- a tubular mixer housing (18, 118, 218, 318) which extends in the direction of a longitudinal axis (313) up to a distal mixer end which has an outlet opening for the components,
- at least one mixing element (12, 112, 212, 312) arranged in the mixer housing (18, 118, 218, 318) for mixing the components, and
- a connector region (14, 114) which is made in one piece with the mixing element (12, 112, 212),
wherein, for manufacturing the mixer housing (18, 118, 218, 318),
- a first end (325) of a plastic film (20, 326) is welded to the mixing element (12, 112, 212, 312) along the longitudinal axis (313);
- the plastic film (20, 326) is wound around the mixing element (12, 112, 212, 312); and
- a second end (327) of the plastic film (20, 326) is likewise welded to the first end (325) of the plastic film (20, 326) along the longitudinal axis (313)
- so that the connector region (14, 114) is arranged at least partly within the mixer housing (18, 118, 218, 318).

## Revendications

1. Mélangeur (11) pour mélanger au moins deux composants capables de s'écouler, comportant
- un boîtier de mélangeur (18, 118, 218, 318) tubulaire qui s'étend en direction d'un l'axe longitudinal (13, 313) jusqu'à une extrémité distale (16) du mélangeur, laquelle présente une ouverture de sortie (17, 117, 217) pour les composants, et
- au moins un élément de mélange (12, 112, 212, 312) agencé dans le boîtier de mélangeur (18, 118, 218, 318) et destiné à mélanger les composants,
le boîtier de mélangeur (18, 118, 218, 318) étant réalisé d'un film en matière plastique (20, 326) qui présente une épaisseur de 0,5 mm au maximum, et comportant une zone de raccordement (14, 114) réalisée d'un seul tenant avec l'élément de mélange (12, 112, 212) et agencée au moins partiellement à l'intérieur du boîtier de mélangeur (18, 118, 218).

2. Mélangeur (11) selon la revendication 1,
**caractérisé en ce que**
le film en matière plastique (20, 326) est réalisé sous la forme d'un film en matière plastique (20, 326) qui se rétrécit lorsqu'il est chauffé.

3. Mélangeur (11) selon la revendication 2,
**caractérisé en ce que**
le film en matière plastique (20, 326) est réalisé sous la forme d'un film en matière plastique (20, 326) qui est étiré dans une seule direction.

4. Mélangeur (11) selon la revendication 2 ou 3,
**caractérisé en ce que**
le boîtier de mélangeur (18, 118, 218) est réalisé à partir d'un tuyau en matière plastique (20) qui, sous l'action de chaleur, est rétréci sur l'élément de mélange (12, 112, 212) agencé à l'intérieur du tuyau en matière plastique (20).

5. Mélangeur (11) selon l'une des revendications 2 à 4,
**caractérisé en ce que**
le film (20, 326) est réalisé sous la forme d'un film polyester.

6. Mélangeur (11) selon la revendication 1,
**caractérisé en ce que**
le film en matière plastique (20, 326) est réalisé sous la forme d'un film en matière plastique soudable.

7. Mélangeur (11) selon la revendication 6,
**caractérisé en ce que**
le film en matière plastique (326) est réalisé sous la forme d'un film multi-couche, au moins les couches extérieures (328, 329) étant réalisées soudables.

8. Mélangeur (11) selon la revendication 6 ou 7,
**caractérisé en ce que**
le boîtier de mélangeur (318) présente une première soudure (323) orientée le long de l'axe longitudinal (313), par laquelle une première extrémité (325) du film en matière plastique (326) et une seconde extrémité (327) du film en matière plastique (326) sont soudées l'une à l'autre.

9. Mélangeur (11) selon la revendication 8,
**caractérisé en ce que**
le boîtier de mélangeur (318) présente une seconde soudure (324) orientée le long de l'axe longitudinal (313), par laquelle la première extrémité (325) du film en matière plastique (326) et l'élément de mélange (312) sont soudés l'un à l'autre.

10. Mélangeur (11) selon l'une des revendications 1 à 9,
**caractérisé en ce que**
l'ouverture de sortie (117, 217) est réalisée sous la forme d'un raccord (122, 222) pour un applicateur enfichable (123).

11. Mélangeur (11) selon la revendication 10,
**caractérisé en ce que**
le raccord (122) est réalisé d'un seul tenant avec l'élément de mélange (112).

12. Mélangeur (11) selon la revendication 10,
**caractérisé en ce que**
le raccord (222) est réalisé sous la forme d'une pièce séparée et est agencé au moins partiellement à l'intérieur du boîtier de mélangeur (218).

13. Procédé de réalisation d'un mélangeur (11) pour mélanger au moins deux composants capables de s'écouler, comportant
- un boîtier de mélangeur (18, 118, 218) tubulaire qui s'étend en direction d'un axe longitudinal (13) jusqu'à une extrémité distale (16) du mélangeur, laquelle présente une ouverture de sortie (17, 117, 217) pour les composants,
- au moins un élément de mélange (12, 112, 212) agencé dans le boîtier de mélangeur (18, 118, 218) et destiné à mélanger les composants, et
- une zone de raccordement (14, 114) réalisée d'un seul tenant avec l'élément de mélange (12, 112, 212),
dans lequel, en vue de réaliser le boîtier de mélangeur (18, 118, 218), l'élément de mélange (12, 112, 212) est agencé dans un tuyau (20) d'un film en matière plastique (20, 326) qui se rétrécit sous l'action de chaleur aussi loin en direction radiale que le film en matière plastique (20, 326) s'applique contre l'élément de mélange (18, 118, 218), et la zone de raccordement (14, 114) est agencée au moins partiellement à l'intérieur du boîtier de mélangeur (18, 118, 218).

14. Procédé de réalisation d'un mélangeur (11) pour mélanger au moins deux composants capables de s'écouler, comportant
- un boîtier de mélangeur (18, 118, 218, 318) tubulaire qui s'étend en direction d'un axe longitudinal (313) jusqu'à une extrémité distale du mélangeur, laquelle présente une ouverture de sortie pour les composants,
- au moins un élément de mélange (12, 112, 212, 312) agencé dans le boîtier de mélangeur (18, 118, 218, 318) et destiné à mélanger les composants, et
- une zone de raccordement (14, 114) réalisée d'un seul tenant avec l'élément de mélange (12, 112, 212),
dans lequel, en vue de réaliser le boîtier de mélangeur (18, 118, 218, 318),
- une première extrémité (325) d'un film en matière plastique (20, 326) est soudée à l'élément de mélange (12, 112, 212, 312) le long de l'axe longitudinal (313),
- le film en matière plastique (20, 326) est enroulé autour de l'élément de mélange (12, 112, 212, 312), et
- une seconde extrémité (327) du film en matière plastique (20, 326) est soudée à la première extrémité (325) du film en matière plastique (20, 326) également le long de l'axe longitudinal (313),
- de sorte que la zone de raccordement (14, 114) est agencée au moins partiellement à l'intérieur du boîtier de mélangeur (18, 118, 218, 318).
